# EUROPEAN PATENT SPECIFICATION

(11) **EP 0 280 446 B1**
(45) Date of publication and mention of the grant of the patent: **28.06.1995**
(21) Application number: 88301212.2
(22) Date of filing: 12.02.1988
(51) Int. Cl.: B01D 1/12, C02F 1/04

(54) **Method for the production of highly pure water by distillation**
Verfahren zur Erzeugung von hoch reinem Wasser durch Destillation
Méthode pour la production de l'eau de grande pureté par distillation

(30) Priority: 26.02.1987 FI 870846
(43) Date of publication of application: 31.08.1988
(73) Proprietor: OY SANTASALO-SOHLBERG AB, 04300 Hyryla (FI)
(72) Inventor: Santasalo, Lauri, SF-00340 Helsinki (FI); Huhta-Koivisto, Esko, SF-02170 Espoo (FI); Ruokonen, Jouko, 00630 Helsinki (FI)
(74) Representative: Lee, Philip Graham

(56) References cited:
- DE-A- 1 810 145
- FR-A- 457 160
- GB-A- 111 961
- GB-A- 1 109 675
- US-A- 2 615 688
- PATENT ABSTRACTS OF JAPAN, vol. 10, no. 25 (M-450)[2082], 31th January 1986;& JP-A-60 181 587 (TOSHIBA K.K.) 17-09-1985

## Description

The present invention concerns a method for the production of highly pure water by distillations using a column construction in a distilling apparatus, comprising a pure vapour input connector, an input connector for water to be distilled, numerous heat exchange tubes within the column construction, a pure vapour removal connector, a distillate removal connector and a connector for removal of water to be distilled which has not been vaporized.

Numerous types of distilling apparatus of the kind defined above are known. The problems associated with energy economy have been solved in distilling apparatus now on the market, and attention is nowadays directed primarily to the quality of the distilled water.

The quality of the distilled water is influenced by the materials of the structures of the distilling apparatus, the structural details of the distilling apparatus and, above all, the mode of welding applied in producing said structures.

In production of highly pure distilled water, particular attention is nowadays paid to minor impurities, of even molecular order of magnitude, which in methods carried out in accordance with prior art are able to enter microscopic crevices in the structures.

Such microscopic crevices are formed e.g. when the heat exchange tubes are affixed to the flanges. We may particularly mention biogenic bacteria, viruses, endotoxins, etc., which have a molecular weight even of the order of 10,000 to 500,000. Such impurities are extremely harmful, and they may totally destroy the quality of the distilled water. It has not been hitherto possible to avoid this drawback.

In distilling as known at present, the general principle of operation is that in the column of the distilling apparatus pure vapour and feed water is conducted into a distribution space by means of an input connector whence it runs down by the heat exchange tubes, within them. Particularly susceptible points regarding the formation of microcrevices are the junctions between the heat exchange tubes and the flange structures. In existing distilling apparatus elimination of microcrevices has therefore been attempted by applying the so-called expanding technique. By this solution to the problem comparatively tight-sealing junctures are obtained, but the method involves relatively high cost, and complete elimination of microcrevices cannot be achieved even with this method.

The object of the invention is to achieve a method of producing highly pure water in distilling apparatus column designs of a type generally known. The more detailed object of the invention is to utilise a distilling apparatus column construction in a manner so as to avoid harmful microcrevices.

The aims of the invention are achieved by a method for the production of highly pure water by distillation, in which pure water vapour is condensed utilizing a hollow column with a plurality of tubes passing therethrough in heat exchange relationship, characterised in that pure water vapour is fed by a vapour entry port (A), from the top downwards through the plurality of tubes for condensation and subsequent collection and removal while water to be distilled is passed upwards from a water input connector (B) around the tubes within the column, and in heat-exchange relationship with the said tubes, for at least partial conversion to vapour and subsequent removal.

In the method of the present invention numerous significant advantages are gained. It is proposed to arrange the inputs of water to be distilled and of pure vapour contrary to the traditional way of thinking. Thanks to this, no harmful microcrevices are encountered in the distilling apparatus column construction of the invention, and the quality of the distilled water meets even the strictest quality requirements.

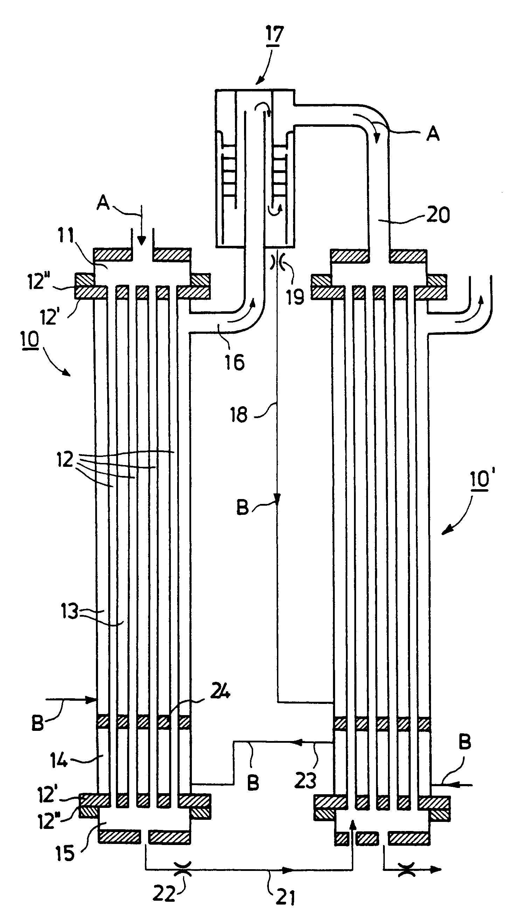

The invention is hereinafter described in detail, by way of non-limitative example, with reference to the accompanying drawing.

This drawing is a schematic elevational view of an advantageous embodiment of a distilling apparatus column construction.

In the drawing, the distilling apparatus column 10 comprises a distribution chamber 11, the flow of the vapour entering this chamber being indicated with arrow A. Within the column structure 10 is a plurality of heat exchange tubes 12, through which the pure steam is caused to flow. Between the heat exchange tubes 12 there is an intermediate space 13 by which the impure feed water, or the water to be distilled, is caused to flow in a direction indicated by arrow B. Also shown is a preheating space 14 of which the significance will hereafter become apparent.

As can be seen, the column construction 10 of the invention provides at both ends of the heat exchange tubes 12 an hygienic junction in that the heat exchange tubes 12 have by their ends joined by welding or pressing with the flanges 12', using an accepted sealing compound 12''. When a technique like this is applied, no microcrevices at all can form.

At the bottom of the column construction 10 is a collector chamber 15, in which the distillate accumulates. The mixture of vapour and liquid droplets has been caused to flow by way of the connector 16 to a droplet separator 17. The droplet separator 17 may be of any type of droplet separator, for which reason its detailed design is not shown. One droplet separator which can be contemplated is, for instance, the droplet separator based on the centrifugal principle which has been disclosed in Finnish Patents 47083 and 61999. The liquid droplets separated in the droplet separator 17 are connected by the connector 18 in a flow B to the next column 10' of the distilling apparatus. There is a flow restriction 19 in the flow line 18.

The pure vapour is conducted from the droplet separator 17 in a flow A by the connector 20 to the next column 10' of the distilling apparatus.

The pure distillate is conducted from the collector chamber 15 by the connector 21, e.g. to the next column 10', into an equivalent collector chamber, or directly to the pure distillate output. A flow restriction 22 is provided in the flow line 21.

As can be seen from the drawing figure, the operation of this embodiment the feed water is carried as a flow B from the preheater of the column construction 10' by the connector 23 to the preheater 14 of the column construction 10.

Distilling apparatus units employed in practice may comprise numerous column constructions 10, 10' and so forth, in which case the feed water flows in a flow B through numerous preheaters 14 and is heated by a certain amount in each preheater 14. Thus, the feed water coming to the column construction 10 is already warmed up considerably and less energy is therefore required to evaporate it in the column construction 10. The preheating space 14 is defined between the lower flange 12' and the false bottom 24.

## Claims

1. A method for the production of highly pure water by distillation, in which pure water vapour is condensed utilizing a hollow column (10) with a plurality of tubes (12) passing therethrough in heat exchange relationship, characterised in that pure water vapour is fed by a vapour entry port (A) from the top downwards through the plurality of tubes (12) for condensation and subsequent collection (15) and removal (21) while water to be distilled is passed upwards (13) from a water input connector (B) around the tubes (12) within the column (10), and in heat-exchange relationship with the said tubes, for at least partial conversion to vapour and subsequent removal (16).

2. Use of a column construction in a distillation apparatus, for carrying out the method of claim 1, comprising a surrounding column (10) and a plurality of tubes (12) extending within the column, which tubes, at each end of the column, pass through, and are joined by welding or pressing with, respective flanges (12') to define the internal column space, the upper flanges (12') also defining at least in part a vapour distribution chamber (11) for incoming vapour (A) to be condensed in the tubes, and the lower flanges (12') also defining at least in part a distillate collecting chamber (15) for the condensed water, and a water port (B) being provided for water to enter the internal column space to be distilled by heat exchange with condensing vapour.

3. Use of a column construction as claimed in claim 2 whereby a false bottom (24) extends across the column (10) around the tubes (12) to define with the lower flanges (12') a preheating chamber for water.

4. Use of a plurality of column constructions as claimed in claim 3, whereby the feed water flows through a plurality of the preheating chambers and is heated by a certain amount in each preheating chamber.

## Patentansprüche

1. Verfahren zur Herstellung von hochreinem Wasser durch Destillation, bei welchem reiner Wasserdampf unter Anwendung einer Hohlsäule (10) mit einer Vielzahl von in Wärmeaustauschbeziehung durchgehende Rohren (12) kondensiert wird, welches dadurch gekennzeichnet ist, daß reiner Wasserdampf mittels einer Dampfeinlaßöffnung (A) von oben durch die Vielzahl von Rohren (12) für die Kondensation und nachfolgende Sammlung (15) und Entfernung (21) gespeist wird, während zu destillierendes Wasser von einem Wassereinlaßanschluß (B) um die Rohre (12) in der Säule (10) in Wärmeaustauschbeziehung mit den Rohren nach oben gespeist wird, und zwar für zumindest eine Teilumwandlung zu Dampf und darauffolgendes Entfernen (16).

2. Anwendung eines Säulenaufbaus in einer Destillieranlage für die Durchführung des Verfahrens von Anspruch 1, mit einer umgebenden Säule (10) und einer Vielzahl von Rohren (12), die sich in der Säule erstrecken, wobei die Rohre an jedem Ende der Säule durchgehen und mittels Verschweißen oder Verpressen mit jeweiligen Flanschen (12') verbunden sind, um einen Innensäulenraum zu definieren, wobei die oberen Flansche (12') zudem zumindest einen Teil einer Dampfverteilungskammer (11) für eintretenden, in den Rohren zu kondensierenden Dampf (A) definieren und die unteren Flansche (12') zudem zumindest einen Teil einer Destillatsammelkammer (15) für das kondensierte Wasser definieren und eine Wasseröffnung (B) für Wasser vorgesehen ist, damit es in den Innensäulenraum eintritt, um durch Wärmeaustausch mit kondensierendem Dampf destilliert zu werden.

3. Anwendung eines Säulenaufbaus nach Anspruch 2, wobei sich ein falscher Boden (24) quer über die Säule (10) um die Rohre (12) erstreckt, um mit den unteren Flanschen (12') eine Vorheizkammer für Wasser zu definieren.

4. Anwendung einer Vielzahl von Säulenaufbauten nach Anspruch 3, wobei das Zufuhrwasser durch eine Vielzahl von Vorheizkammern strömt und durch eine bestimmte Menge in jeder Vorheizkammer geheizt wird.

## Revendications

1. Un procédé pour la production d'eau très pure par distillation dans lequel de la vapeur d'eau pure est condensée en utilisant une colonne creuse (10) avec plusieurs tubes (12) passant à travers selon une relation d'échange de chaleur, caractérisé en ce que la vapeur d'eau pure est acheminée par un orifice d'entrée de vapeur (A) à partir du dessus vers le bas à travers les tubes (12) pour la condensation et le recueil subséquent (15) et l'élimination (21) tandis que l'eau devant être distillée passe vers le haut (13) à partir d'un connecteur d'entrée d'eau (B) autour des tubes (12) dans la colonne (10) et selon une relation d'échange de chaleur avec lesdits tubes pour au moins une transformation partielle en vapeur et le retrait subséquent (16).

2. Utilisation d'une réalisation de colonne dans un appareil de distillation pour la mise en oeuvre du procédé selon la revendication 1, comprenant une colonne entourante (10) et plusieurs tubes (12) s'étendant dans la colonne, lesquels tubes à chaque extrémité de la colonne passent à travers et sont reliés par soudure ou brasure avec des rebords respectifs (12') pour définir l'espace de colonne interne, les rebords supérieurs (12') définissant également au moins en partie une chambre de distribution de vapeur (11) pour la vapeur entrant (A) devant être condensée dans les tubes et les rebords inférieurs (12') définissant également au moins en partie une chambre de recueil de distillat (15) pour l'eau condensée, et un orifice d'eau (B) étant prévu pour l'eau pour son entrée dans l'espace de colonne interne devant être distillée par échange de chaleur avec la vapeur de condensation.

3. Utilisation de la réalisation de colonne selon la revendication 2, dans laquelle un faux fond (24) s'étend au travers de la colonne (10) autour des tubes (12) pour définir avec les rebords inférieurs (12') une chambre de préchauffage pour l'eau.

4. Utilisation de réalisations de colonnes selon la revendication 3, dans laquelle l'eau d'alimentation s'écoule à travers plusieurs chambres de préchauffage et est chauffée selon une certaine quantité dans chaque chambre de préchauffage.
